# EUROPEAN PATENT SPECIFICATION

(11) **EP 0 516 916 B1**
(45) Date of publication and mention of the grant of the patent: **01.04.1998**
(21) Application number: 92101630.9
(22) Date of filing: 31.01.1992
(51) Int. Cl.: G02B 6/255, G02B 6/28, G01M 11/00

(54) **Method of fabrication of optical fiber couplers and corresponding apparatus**
Methode zur Fabrikation von Glasfaserkopplern und zugehörige Vorrichtung
Procédé de fabrication des coupleurs à fibre optique et appareil correspondant

(30) Priority: 03.06.1991 JP 130213/91; 30.07.1991 JP 212950/91; 30.07.1991 JP 212951/91; 02.08.1991 JP 194521/91; 02.08.1991 JP 194524/91
(43) Date of publication of application: 09.12.1992
(73) Proprietor: SUMITOMO ELECTRIC INDUSTRIES, LTD., Osaka-shi, Osaka 541 (JP); SUMIDEN OPCOM, LTD., Ota-ku, Tokyo (JP)
(72) Inventor: Sasaoka, Eisuke, c/o Yokohama Works of Sumitomo, Yokohama-shi, Kanagawa (JP); Fukuma, Masumi, c/o Yokohama Works of Sumitomo, Yokohama-shi, Kanagawa (JP); Takimoto, Hiroaki, c/o Yokohama Works of Sumitomo, Yokohama-shi, Kanagawa (JP); Suganuma, Hiroshi, c/o Yokohama Works of Sumitomo, Yokohama-shi, Kanagawa (JP); Yokota, Hiroshi, c/o Yokohama Works of Sumitomo, Yokohama-shi, Kanagawa (JP); Yoshikawa, Junichi, c/o Yokohama Works of Sumitomo, Yokohama-shi, Kanagawa (JP); Arimoto, Kazuhiko, c/o Sumiden Opcom Limited, Ota-ku, Tokyo (JP)
(74) Representative: Grünecker, Kinkeldey, Stockmair & Schwanhäusser Anwaltssozietät

(56) References cited:
- EP-A- 0 225 737
- EP-A- 0 238 134
- EP-A- 0 423 437
- US-A- 4 685 799
- US-A- 4 763 272
- PATENT ABSTRACTS OF JAPAN vol. 15, no. 356 (P-1249) 9 September 1991 & JP-A-31 36 008
- PATENT ABSTRACTS OF JAPAN vol. 14, no. 165 (P-1030) 30 March 1990 & JP-A-20 20 809
- ELECTRONICS & WIRELESS WORLD vol. 94, no. 1627, May 1988, Surrey, GB, pp 496-500; S.NEWTON: 'A new technique in o.d.t.r.'
- PATENT ABSTRACTS OF JAPAN vol. 9, no. 163 (P-371) 9 July 1985 & JP-A-60 039 526
- TRANSACTIONS OF THE INSTITUTE OF ELECTRONICS, INFORMATION AND COMMUNICATION ENGINEERS OF JAPAN vol. E71, no. 4, April 1988, Tokyo, JP, pp 348-349; HORIGUCHI ET AL.: 'Optical reflectometer using low coherence source'
- JOURNAL OF THE OPTICAL SOCIETY OF AMERICA - A vol. 3, no. 8, August 1986, New York, US, pp 1305-1310; TAKAI ET AL.: 'Time-average readout of speckle photographs by laser illumination from a vibrating optical fiber'
- PATENT ABSTRACTS OF JAPAN vol. 12, no. 170 (P-705) 20 May 1988 & JP-A-62 280 818

## Description

The present invention relates to a method of fabricating optical fibre couplers by a so-called fusion-elongation method for fabricating couplers by heating, fusing and elongating the parts of the gathered optical fibres and an apparatus therefor.

The optical fibre coupler is a device for splitting and coupling light passing through a plurality of optical fibres. The coupler is fabricated by heating and fusing, and elongating the parts of the gathered optical fibres. To fabricate optical fibre couplers having a desired splitting ratio, the splitting ratio must be monitored in the fusion-elongation process.

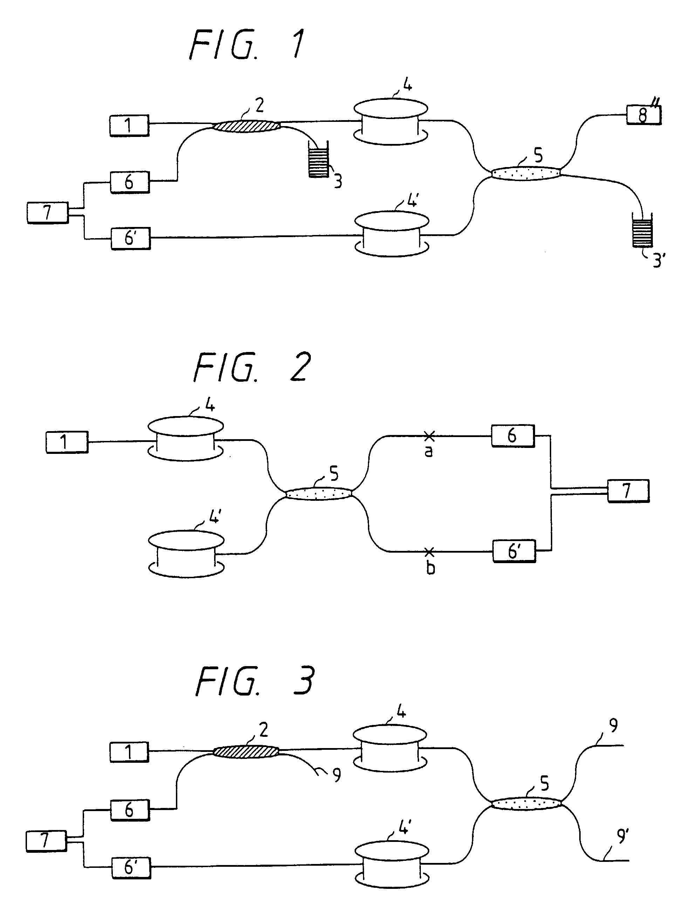

A transmission monitor method has been known as one of the methods for monitoring the splitting ratio, and is disclosed in Japanese Patent Laid-Open Publication No. Sho. 63-175812. In this method, as shown in Fig. 2, one or first end of the combination of optical fibres 4 and 4', which are used for fabricating optical fibre couplers 5, is coupled with a light source 1 while the other or second end is coupled with photodetectors 6 and 6'. A splitting ratio of the coupler is computed, by a computer, using the light power received by the photodetectors 6 and 6'. Another known splitting ratio monitoring method is a reflection monitor method, which is described in Japanese Patent Application No. Hei 1-275616 which application was published after the priority date of the present invention. In this method, as shown in Fig. 3, light is led into the first end of the combination of optical fibres 4 and 4', which are used for fabricating optical fibre couplers 5, and is reflected at the second end, the reflected light is guided through a coupler 5 and a splitting coupler 2 to photodetectors 6 and 6'. A splitting ratio of the coupler is determined on the basis of the detection results by the photodetectors.

In the transmission monitor method shown in Fig. 2 every time a coupler is fabricated, connection must be made at terminals "a" and "b". This connection work requires a high skill, and sometimes causes measurement errors. The reflection monitor method is advantageous in that such a connection work is not required, but is disadvantageous in that light from the light source 1 passes through the optical fibre and is reflected at the end 9' of the fibre and at the open end 9, and the reflected light interfere with each other in a coupler 5, causing measurement errors of the splitting ratio.

Accordingly, it is the object of the present invention to reduce the measurement errors occurring in the conventional reflection monitor method by exploiting such an advantageous feature of the reflection monitor method that the connection work carried out every time a coupler is formed, is not required.

This object is solved by the inventive methods and apparatus according to claims 1 and 7.

In the following, the various methods and apparatuses for reducing measurement errors with the reflection monitor method are described in detail with respect to the accompanying drawings. The drawings illustrate, in particular:
- Fig 1: is an exemplanatory diagram for explaining a coupler fabricating method based on the reflection monitor method which is a specific example of the inventive method according to claim 1;
- Fig. 2: is an explanatory diagram for explaining a coupler fabricating method based on a conventional transmission monitor method;
- Fig. 3: is an explanatory diagram for explaining a coupler fabricating method based on a conventional reflection monitor method;
- Fig. 4: shows the relationship of Rayleigh scattering light power versus fibre length;
- Fig. 5: is an explanatory diagram showing the outline of an optical fibre fabricating apparatus;
- Fig. 6: is a flow chart showing a sequence of steps for fabricating an optical fibre coupler;
- Fig. 7: is a graphical representation of splitting ratios of optical couplers fabricated by a fabricating method according to the present invention and those of optical fibres fabricated by the conventional method;
- Fig. 8: is an explanatory diagram showing an outline of an optical measuring system for explaining another method for fabricating optical fibre couplers;
- Fig. 9: is a table which comparatively shows the results of measuring the received light powers in the conventional reflection monitor measuring system and a reflection monitor measuring system according to the present invention;
- Fig. 10: is an explanatory diagram showing an outline of an optical measuring system for explaining another method for fabricating optical fibre couplers;
- Fig. 11: is a table which comparatively shows the results of measuring the received light powers in the conventional reflection monitor measuring system and in a reflection monitor measuring system according to the present invention;
- Fig. 12: is a graph showing the characteristic of Rayleigh scattering light for pulse light;
- Fig. 13: is an explanatory diagram showing an outline of an optical fibre couplers fabricating apparatus by which a method of fabricating optical fibre couplers of the invention is executed;
- Fig. 14: is a flow chart showing a sequence of steps for fabricating an optical fibre coupler by a fabricating method;
- Fig. 15: is a graphical representation of splitting ratios of optical fibre couplers fabricated by a fabricating method according to the present invention and according to a conventional method;
- Fig. 16: is an explanatory diagram showing an outline of another basic structure for a reflection monitor method system; and
- Fig. 17: is an explanatory diagram showing an outline of another basic structure for a reflection monitor method system.

Fig. 1 is a diagrammatic view for explaining the reflection monitor method according to claim 1. Long single mode fibres 4 and 4' are wound around bobbins, respectively. The first end of the fibre 4 is connected through a splitting coupler 2 to a light source 1, while the second end is connected through a coupler 5 to a reflection device 8", usually formed by cutting the fibre end flat. The first end of the split fibre of the branch 2 is connected to a photodetector 6, while the second end is coupled with a reflection preventing device 3. The optical fibre 4' is connected at the first end to an photodetector 6', and at the second end to a reflection preventing device 3' by way of a coupler 5.

Light emitted from the light source 1 passes through the splitting coupler 2 and the coupler 5, and is reflected by the reflection device 8". The reflected light is led to the photodetectors 6 and 6' constructed with optoelectric transducing elements, which measure the quantities of the reflected light. The light quantities are supplied to a computer 7 which computes a splitting ratio. The computed ratio is used for controlling the apparatus for fabricating the coupler 5.

The reflection preventing device may be realized by immersing the distal end of the optical fibre in light absorbing material, for example, black ink or refractive index matching oil, for example, silicon oil, by bending the distal end of the optical fibre to reduce its diameter, thereby causing light loss, or obliquely cutting or polishing the distal end of the optical fibre.

A more specific means of the invention 1 is such that in the fabricating method, long optical fibres are used, a light source and photodetectors are provided on the first end side of the optical fibres, and a coupler forming part is formed on the second end side of the fibres.

In the fabricating method of the invention shown in Fig. 1, the Fresnel reflection at the distal end of the fibre 4' wound around the bobbin is prevented by means, for example, of immersing the distal end in the refractive index matching oil. The Fresnel reflection is caused by only the reflection device 8" located at the distal end of the fibre 4. Therefore, no interference of the reflected light occurs and the measurement values by the photodetector 6' is invariable. The reflection preventing means 3 is also provided on the distal end side of the coupler 2, so that the measurement value by the photodetector 6 is also stable.

To confirm the advantageous effects by the present invention, stabilities of the light powers received by the photodetectors 6 and 6' were measured and compared in the two measuring systems, the conventional reflection monitor measuring system shown in Fig. 3, and the reflection monitor measuring system of the invention shown in Fig. 1. The light source 1 was an LD light source capable of generating light of 0.85 µm in wavelength. The optical fibre coupler 2 for measurement was a single mode coupler operable in the wavelength of 0.85 µm. The fibres 4 and 4' wound around the bobbins were single mode optical fibres of a 0.85 µm band. In the reflection monitor measuring system, an optical fibre coupler having the splitting ratio of 50 % was fabricated. The quantities of light received by the photodetectors 6 and 6' were measured in a state that a portion of the fibre 4 near its distal end is being vibrated. The results of the measurements were: in the conventional reflection method, the quantity of light received by the photodetector 6 varied within the range of - 37.6 to - 44.6 dBm, and that by the photodetector 6' varied within the range of - 34.3 to 41.7 dBm. In the method of the invention, the quantity of light received by the photodetector 6 little varied at - 38.0 dBm, and that by the photodetector 6' little varied at - 35.0 dBm. Variations of the splitting ratio were obtained using the measurement results by the photodetectors 6 and 6'. In the conventional reflection monitor method, the splitting ratio greatly varied within the range from 23 % to 76 %, while in the reflection monitor method of the invention, it little varied because the quantities of the received light were stable.

As described above, the optical fibre coupler fabricating method of the present invention according to claim 1 can eliminate the interference of the Fresnel reflected light causing the measurement error, which is the disadvantage of the reflection monitor method, while exploiting its advantage that the connection work performed every coupler formation is not required. Accordingly, the method can improve the efficiency of fabricating the optical fibre couplers and the accuracy of measuring the splitting ratio.

In the method according to Fig. 3, the reflected light from the open end of the optical fibre 4, which it is to be detected, is weak Fresnel reflection light. Therefore, in a case where the fibre 4 is long, the detected reflected light is noticeably affected by Rayleigh scattering within the optical fibres 4 and 4'. This will cause measuring errors.

Light is led into the optical fibre from an incident end of the fibre, and is reflected at the distal end to return to the incident end. The return light contains Fresnel reflection light from the distal end of the fibre, and Rayleigh scattering light present over the entire optical fibre. A power Pr of the Fresnel reflection light is given by${\text{Pr = Po·α}}_{\text{2}} \text{·r}$ where$\text{r = Fresnel reflectivity}$$\text{α = transmittance of the optical fibre (= emitting light power when transmitted/incident light power when transmitted)}$$\text{Po = incident light power.}$

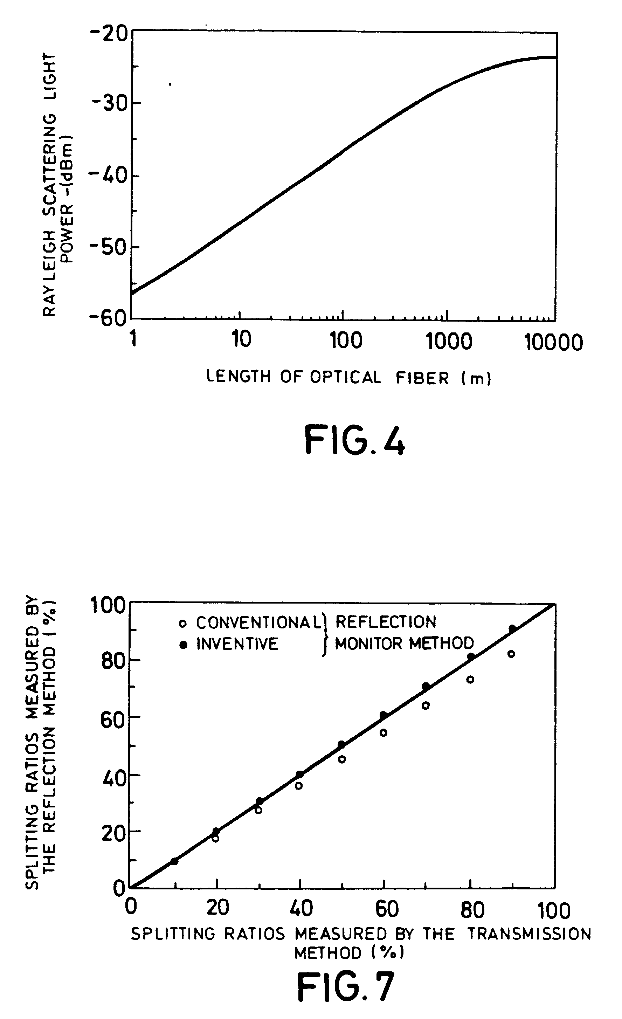

The above formula teaches that when the optical fibre is long and the transmittance of the fibre becomes small, the Fresnel reflection light power becomes extremely small. As shown in Fig. 4, the Rayleigh scattering light power becomes large according to the length of the optical fibre. For this reason, where long optical fibres are used, the effect by the Rayleigh scattering light is great. From this fact, it is seen that if only the Rayleigh scattering light power may be measured within the optical fibre, only the Fresnel reflection light power can be calculated from the light power which contains both the Rayleigh scattering light power and the Fresnel reflection light power.

In the method, the detection of the Rayleigh scattering light is carried out preferably suppressing the Fresnel reflection at the second end of the optical fibre. Further, the Fresnel reflection is suppressed at the second end of the optical fibre preferably by immersing the second end of the optical fibre in refractive index matching material.

As described above, before the coupler forming part is heated and fused, the quantity of Rayleigh scattering light in the optical fibre is detected at the first end of the optical fibre. The Rayleigh scattering light caused in the optical fibre can be obtained in the form of numerical value. Then, after the coupler forming part is heated and fused, a fixed quantity of light is led into the optical fibre from the first end thereof, and a quantity of the reflected light is detected at the first ends of a plurality of optical fibres. By subtracting the detected value of the Rayleigh scattering light from the detected values of the reflected light, the quantity of only the Fresnel reflection light in the coupler being under fabrication can be obtained. Calculation of the splitting ratio of the optical fibre coupler on the basis of the quantity of the Fresnel reflection light thus obtained, will provide an exact splitting ratio.

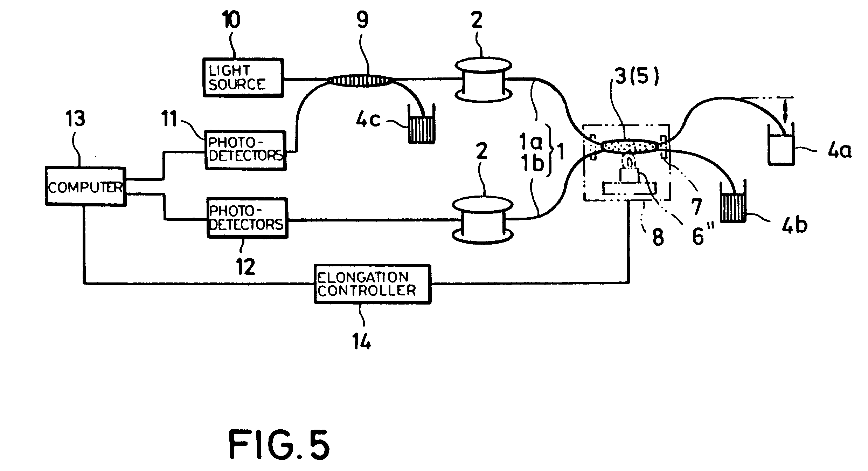

An apparatus for fabricating optical fibre couplers, will first be described with reference to Fig. 5. In the fabricating apparatus, a couple of long single-mode optical fibres 1, which are wound around bobbins 2, are used. A number of optical fibre couplers 3 having the splitting ratio of 1 : 1 (50 %) are successively formed while the fibres are pulled out of the bobbins. In this embodiment, the two fibres, which are exactly the same, are used. For ease of explanation, the optical fibre located above in the drawing is called a first optical fibre and denoted as la, and the fibre located below is called a second optical fibre and denoted as 1b. The first ends of the fibres la and 1b are coupled with various devices for monitoring the splitting ratio of the optical fibre couplers 3 to be formed and for controlling the coupler forming operation. The second ends of the fibres are immersed in refractive index matching oil pots 4a and 4b for preventing the Fresnel reflection. The second or other end of the second optical fibre 1b is always immersed in the refractive index matching oil pot 4b. The second end of the first optical fibre la is immersed in the refractive index matching oil pot 4a and pulled out of the oil pot in the fabricating process to be given later. It is immersed in the oil pot when the Fresnel reflection is suppressed at the second end of the first optical fibre la, and it is pulled out of the oil pot when the Fresnel reflection is actively performed there. A coupler forming part 5 is formed in a location of the optical fibres la and 1b, where is closer to the refractive index matching oil pots 4a and 4b. The coupler forming part 5 is formed in such a way that the covers of the portions of the fibres la and 1b where the coupler forming part is to be formed, are removed, and the fibres are gathered there. A coupler is formed by heating and fusing the thus formed coupler forming part by a suitable heating means, such as a burner, and elongating it. To this end, the coupler forming part 5 is set to an elongation jig 8 including a burner 6" and elongation tables 7.

The first end of the first optical fibre la is connected through a measuring coupler 9 to a light source 10, such as an SLD (superluminescent diode). A fixed quantity of light is emitted from the light source 10 and is led into the fibre la from the first end thereof, through the measuring coupler 9. As for the split of the coupler 9 on the first optical fibre la side, the first end of the coupler is connected to the first optical fibre la, and the second end is put in a refractive index matching oil pot 4c to prevent reflection of light at the second end. As for the split of the coupler on the monitor devices side, the first end of the coupler is connected to the light source 10, and the second end is connected to a first photodetector 11. The first end of the second optical fibre 1b is connected to a second photodetector 12. Those photodetectors are constructed with optoelectric transducing elements in this embodiment, and are connected to a computer 13 for computing splitting ratios.

Light reflected at the second end of the first optical fibre la is split in the coupler forming part 5 into light going to the first optical fibre la and light going into the second optical fibre 1b. The reflected light passes through the first optical fibre la and is further split to enter the first photodetector 11 where it is detected. The reflected light passes through the second optical fibre 1b and enters the second photodetector 12 where it is detected. The first photodetector 11 detects two types of light; one is the irradiated light containing only Rayleigh scattering light and the other is the light containing the irradiated Rayleigh scattering light and Fresnel reflection light. To detect the former, the second end of the first optical fibre la is immersed in a refractive index matching oil pot 4a, to suppress the Fresnel reflection light. To detect the latter, the second end is pulled out of the pot 4a and actively Fresnel reflects the incoming light.

The detect values by the first and second detectors 11 and 12 are input to the computer 13 for splitting ratio calculation. The computer calculates a splitting ratio by using a formula to be given later. When the calculated value reaches a predetermined splitting ratio (50 % in this embodiment), the computer outputs a control signal to stop the elongating operation of the elongation controller 14 coupled with the computer.

The elongation controller 14, which is coupled with the elongation jig 8, drives the jig 8 in response to the control signal from the computer 13. The jig 8 is provided with the burner 6" for heating the coupler forming part 5 and the elongation tables 7. With the jig, the coupler forming part 5 is heated, fused, and elongated. When receiving a stop control signal from the computer 13, the elongation controller 14 stops the operation of the jig 8 with the control signal.

The principles of the monitor method will be described in brief. Assuming that a light power detected by the first photodetector 11 before the optical fibre coupler is fabricated is Po, and light powers detected by the first and second photodetectors 11 and 12 when the coupler is being fabricated are P1 and P2, a splitting ratio (defined by a ratio of the light powers in the branch line) of the optical fibre coupler 3, that is computed by the computer 13 during the coupler fabricating process, is expressed by$\text{Splitting ratio = (s/(t + s)) x 100 (%)}$ where${\text{t = (P1/Po)}}^{\text{1/2}} \text{,}$${\text{s = (α1/α2)So(P2}}^{\text{2}} {\text{/PoP1)}}^{\text{1/2}} \text{.}$ In the above formula, α1 and α2 are transmittances (emitting light power/incident light power) of the first and second optical fibres la and 1b, and So is the transmittance of the main line (main line emitting light power/main line incident light power). The calculations by the computer 13 are performed using the formulae as just mentioned. When a desired splitting ratio is reached, the computer outputs a signal to stop the elongating operation of the coupler forming part. Actually, the light powers Po, P1, and P2 are corrected using the detected values of the Rayleigh scattering light in the process to be given hereinafter, in a subtraction manner.

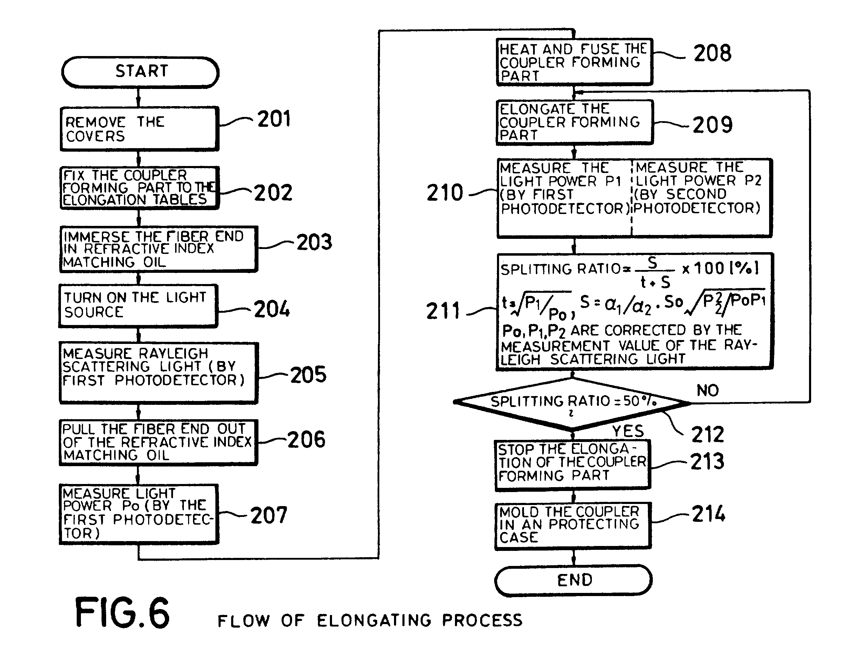

A sequence of coupler fabricating steps will be descried with reference to a flowchart shown in Fig. 6. To start with, the covers of the optical fibres 1 are partially removed to form a coupler forming part 5 (step 201). Both ends of the coupler forming part 5 are fixed to the elongation tables 7 and 7 of the jig 8 (step 202). Subsequently, the second end of the first optical fibre 1a is immersed in the refractive index matching oil pot 4a (step 203), and the light source 10 is turned on (step 204). Rayleigh scattering light present in the first optical fibre la is detected by the first photodetector 11 (step 205). The second end of the first optical fibre 1a is pulled out of the pot 4a (step 206), to be rendered ready for the Fresnel reflection. Then, the reflected light Po is detected by the first photodetector 11 (step 207). Afterwards, in this state, the coupler forming part 5 is heated and fused by the burner 6" (step 208), and elongated (step 209). During the elongating process, the light powers P1 and P2 are detected by the first and second detectors 11 and 12 (step 210). The detected values are input to the computer 13. The computer computes a splitting ratio using those light power values (Po, P1, and P2), and the detected value of the Rayleigh scattering light for correcting the former (step 211). The detecting operation of the light powers P1 and P2 in the elongating process and the calculation of the splitting ratio are repeated till the splitting ratio reaches 50 % (step 212). When 50 % is reached, the computer 13 outputs a stop signal to the elongation controller 14. In response to the stop signal, the elongation controller 14 stops the elongating operation of the jig 8 (step 213). The optical fibre coupler 3 thus formed is molded in or bonded to a protecting member (not shown), such as a case made of quartz (step 214).

A number of optical fibre couplers 3 are successively formed from the two long optical fibres la and 1b wound around the bobbins 2, by repeating the above sequence of fabricating steps. It is noted that the measuring coupler 9 and the second photodetector 12 are coupled with the first and second optical fibres la and 1b only when the first optical fibre coupler 3 is fabricated, and the coupling work may be omitted for fabricating the second and subsequent ones.

Optical fibre couplers 3 were fabricated by the fabricating method of the embodiment as mentioned above, and the splitting ratios of them were measured. The light source 10 was a superluminescent diode of 0.85 µm in wavelength. The first and second optical fibres la and 1b were single mode fibres of 1 km long and the 0.85 µm band. The coupler 9 was also a single mode coupler of the 0.85 µm band.

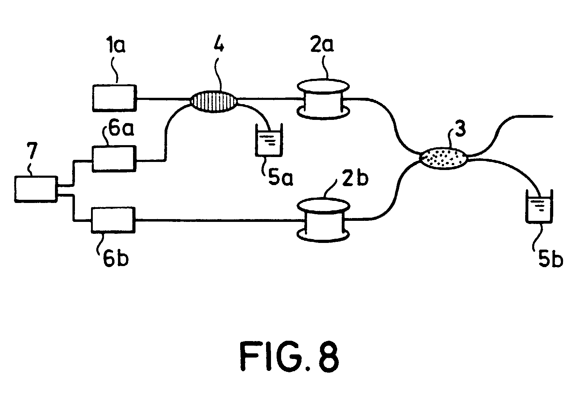

Under the aforementioned conditions, optical fibres of different splitting ratios were fabricated while monitoring the splitting ratios. Splitting ratios of the fabricated optical fibre couplers were measured by the transmission monitor method. The results of the measurement were plotted in Fig. 7. In the figure, black dots indicate the splitting ratios of the optical fibre couplers fabricated by the method of the invention, and white dots indicate the splitting ratios of the couplers fabricated by the conventional reflection monitor method. As seen from graph, the measurement results of the reflection monitor method of the present embodiment is perfectly coincident with those of the transmission monitor method of the present embodiment, and accordingly the optical fibre couplers having the exact splitting ratio were fabricated by the reflection monitor method of the present embodiment. The measurement results of the conventional reflection monitor method are not coincident with those of the conventional transmission monitor method. Therefore, the splitting ratio of the optical fibre couplers fabricated by the conventional reflection monitor method is somewhat inexact. From the above facts, the reflection monitor method of the present embodiment succeeded in removing the influence by the Rayleigh scattering light.

As seen from the foregoing description, in the method according to claim 7, the Rayleigh scattering light caused in the optical fibre is previously detected. In monitoring the splitting ratio of the coupler when the coupler forming part is elongated, the detected value of the reflected light is corrected using the detected value of the Rayleigh scattering light. Accordingly, the influence by the Rayleigh scattering light can be minimized, and the optical fibre couplers fabricated have the exact splitting ratio.

Referring to another method and to understand the advantages of this method, it has to be mentioned that, as already discussed above, in the reflection monitor method, when the reflected light are returned from the ends of a plurality of optical fibres, the light are coupled by the optical fibre coupler. In this case, the reflected light interfere with each other, so that the reflected light power will vary. Rayleigh scattering light from the bobbin-wound optical fibres used for forming the coupler interfere with each other or Rayleigh scattering light and the reflected light interfere with each other, so that the received light power will vary. The variation of the received light power may cause measurement errors in the reflection monitor method.

With the view of solving the above problems, the method provides a method of manufacturing optical fibre couplers which can eliminate the measuring errors caused by the inter-reflected-light interference, the inter-Rayleigh-scattering-light interference, and the interference between the reflected light and the Rayleigh scattering light, while exploiting the advantageous feature of the reflection monitor method that the fibre connection work for each fibre coupler fabrication is not required by using low coherency light for the light incident on the first end of the optical fibre.

In particular, there is provided a method for fabricating optical fibre couplers in which, when an optical fibre coupler is formed by heating and fusing, and elongating a plurality of optical fibres, light is led into one optical fibre from the first end thereof, passes through a coupler forming part, and is reflected at the second end of the optical fibre, and at this time the reflected light is detected at the first end of the optical fibre, and the elongating operation is controlled on the basis of the detected value, wherein the light incident on the first end of the optical fibre is low coherency light.

Fig. 8 shows an illustrative embodiment of an apparatus for executing the mentioned method. To exactly calculate the splitting ratio, it is necessary to exactly measure the Fresnel reflection light returned from the distal end of the bobbin-wound fibre 2a or 2b, which is detected by the photodetector 6a or 6b shown in Fig. 8. If the light source used were of a high coherence type, the Fresnel reflection light would be returned from both the fibres 2a and 2b and coupled in the optical fibre coupler 3 under fabrication, the light would interfere with each other. Further, the Rayleigh scattering light from the bobbin-wound optical fibres would interfere with each other, and the Rayleigh scattering light and the Fresnel reflection light would also interfere with each other. As the result of the interferences, the received light power at the photodetectors 6a and 6b would vary, causing measuring errors.

By using the light source of the low coherence type for the light source, the interferences of the Fresnel reflection light and the Rayleigh scattering light are prevented, so that no variation of the received light power takes place at the photodetectors 6a and 6b.

In Fig. 8, reference numeral la designates an SLD (superluminescent diode) light source of the low coherence type. The principles of measuring the splitting ratio are as described with reference to Fig. 3. In the present embodiment, an SLD of the low coherency type is used for the light source. Accordingly, the measurement is free from the influence by the interference and the light power variation, and thence an exact measurement is ensured. In the case of Fig. 8, the SLD is used for the light source in order to gain low coherency light, but any other suitable means may be used for the same purposes.

To confirm the advantageous effects by the present invention, the light power stability of the photodetectors 6a and 6b were measured and compared by using the reflection monitor measuring system shown in Fig. 8, once with high coherency light and once with low coherency light, and an LD of 0.85 µm in wavelength.

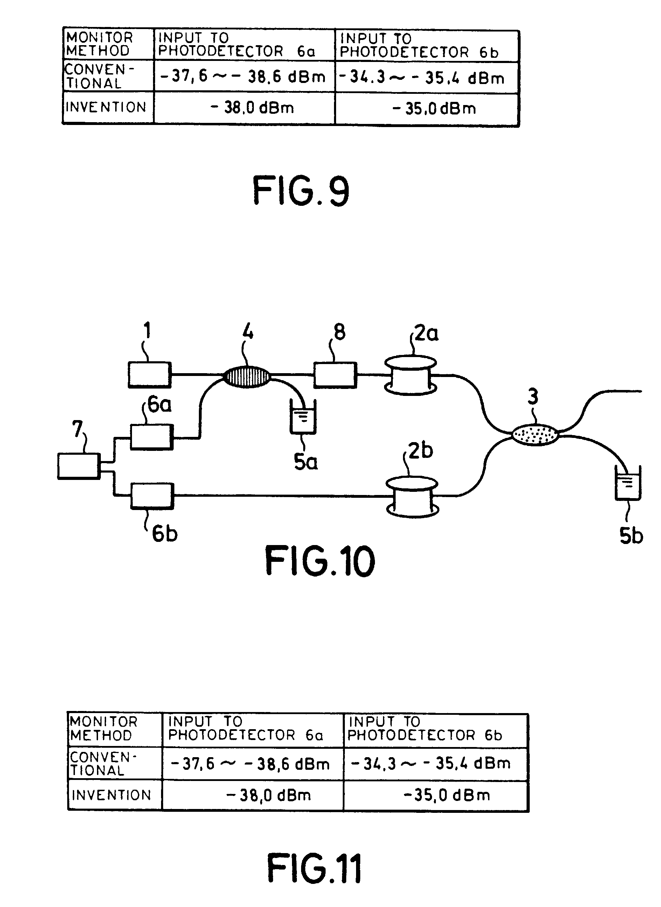

Optical fibre couplers for measurement used as the optical fibres 3 under fabrication in the measuring system were 0.85 µm-band single-mode couplers. The bobbin-wound optical fibres 2a and 2b were also 0.85 µm-band single-mode fibres of 5 km long. Optical fibre couplers of 50 % in splitting ratio were fabricated in the two measurements. The received light powers were measured by the photodetectors 6a and 6b under the condition that a vibration is caused between the bobbin-wound optical fibre 2a and the optical fibre coupler 3 for measurement. The results of the measurements were as tabulated in Fig. 9. As seen from the table, the received light powers measured by the photodetectors 6a and 6b are stable when using low coherency light, while those are varied within the ranges when using high coherency light.

Variation in the splitting ratio was calculated using the measurement results of the photodetectors 6a and 6b shown in Fig. 9. In the monitor method with high coherency light, the splitting ratio was varied in the range between 46 % and 53 %. In the mentioned method, no variation of the splitting ratio was confirmed, since the received light power was stable.

As seen from the foregoing description, the mentioned coupler fabricating method succeeds in eliminating the adverse influence by the interferences of the Fresnel reflection light and Rayleigh scattering light, which will cause measurement errors in the reflection monitor method, while at the same time exploiting the advantageous features of the reflection monitor method. Accordingly, the coupler fabricating method of the inventive method can improve the efficiency of fabricating the optical fibre couplers and the measurement accuracy of the splitting ratios.

Fig. 10 shows an apparatus for carrying out another method. To exactly calculate the splitting ratio, it is necessary to exactly measure the Fresnel reflection light returned from the distal end of the bobbin-wound fibre 2a or 2b, which is detected by the photodetector 6a or 6b shown in Figs 10. If the light source used is of a high coherence type, the Fresnel reflection light are returned from both the fibres 2a and 2b and coupled in the optical fibre coupler 5 under fabrication, the light interfere with each other. Further, the Rayleigh scattering light from the bobbin-wound optical fibres interfere with each other, and the Rayleigh scattering light and the Fresnel reflection light also interfere with each other. As the result of the interferences, the received light power at the photodetectors 6a and 6b vary, causing measuring errors.

According to the mentioned method, at least one of the phase, polarization, and frequency of the Fresnel reflection light and the Rayleigh scattering light, which will cause the interference, is varied, thereby forcibly giving rise to the light power variation owing to the Fresnel reflection light and the Rayleigh scattering light. For example, if the polarization and the phase of the Fresnel reflection light and the Rayleigh scattering light are varied at high speed by a polarization/phase modulator, the interference light power also varies at high speed. When the varying speed of the interference light power is satisfactorily high relative to the averaging time of the photodetectors 6a and 6b, the received light power of each photodetector 6a and 6b is averaged and takes a stable value. As a result, even if the interference of the Fresnel reflection light and the Rayleigh scattering light takes place, the received light powers of the photodetectors 6a and 6b are not varied.

In Fig. 10, reference numeral 8 designates a polarization/phase modulator utilizing a piezo-electric element. In the embodiment according to Fig. 10, the polarization/phase modulator 8 is inserted between the light source 1 and the optical fibre coupler 3. Since the interference light power is varied at high speed by the polarization/phase modulator 8, the averaged and stabilized light powers are measured by the photodetectors 6a and 6b, and consequently an accurate measurement is realized.

In the embodiment of Fig. 10, the polarization/phase modulator utilizing the piezo-electric element is used as the means to vary the interference light power. It may be replaced by another means which is capable of varying at least one of one of the phase, polarization, and frequency of light. Further, the polarization/phase modulator may be placed at any other position than the insertion position shown in Fig. 10, if it lies in the route from the light source 1 to the photodetectors 6a and 6b.

To confirm the advantageous effects by the inventive method according to claim 11, the light power stability of the photodetectors 6a and 6b were measured and compared by using the reflection monitor measuring system shown in Fig. 10 with and without the modulator 8. In both cases, an LD of 0.85 µm in wavelength was used for the light source.

Optical fibre couplers for measurement used as the optical fibres 3 under fabrication in the two measurements were 0.85 µm-band single-mode couplers. The bobbin-wound optical fibres 2a and 2b were also 0.85 µm-band single-mode fibres of 5 km long. The polarization/phase modulator 8 was constructed with a tubular piezo-electric element that is wound with a 0.85 µm-band single mode optical fibre. Optical fibre couplers of 50 % in splitting ratio were fabricated in the two measuring systems. The received light powers were measured by the photodetectors 6a and 6b under the condition that a vibration is caused between the bobbin-wound optical fibre 2a and the optical fibre coupler 3 for measurement. The results of the measurements were as tabulated in Fig. 11. As seen from the table, the received light powers measured by the photodetectors 6a and 6b are stable by using modulator 8, while those are varied within the ranges when not using modulator 8.

Variation in the splitting ratio was calculated using the measurement results of the photodetectors 6a and 6b shown in Fig. 11. In the monitor method without modulator 8, the splitting ratio was varied in the range between 46 % and 53 %. In the monitor method with modulator 8, no variation of the splitting ratio was confirmed, since the received light power was stable.

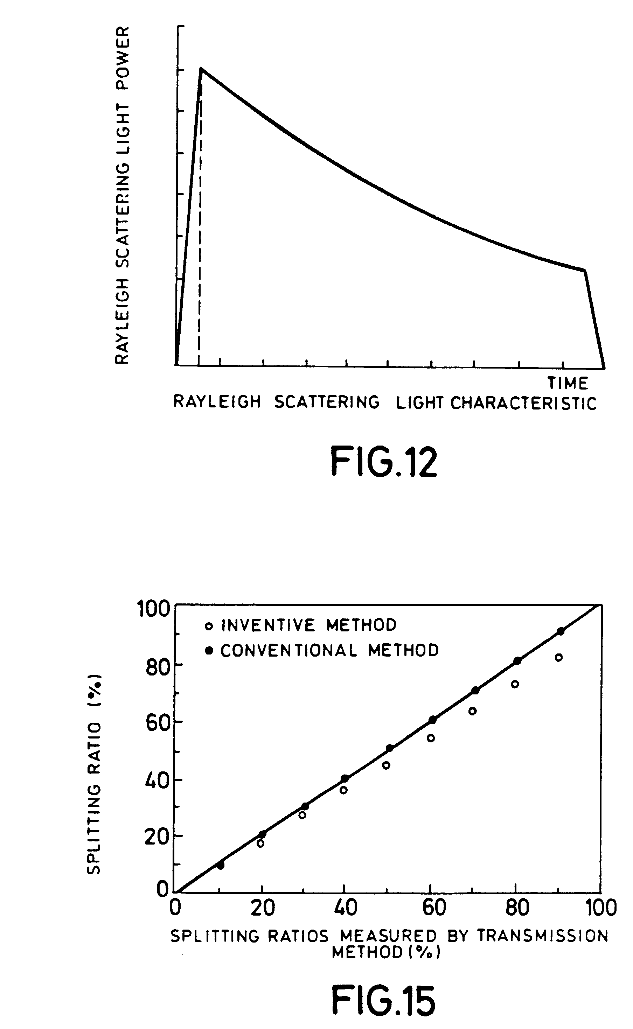

When pulse light is led into a long optical fibre, Rayleigh scattering is caused over the entire optical fibre. Therefore, the Rayleigh scattering light returning to the incident end of the fibre (detected as reflected light) takes a time-dependent waveform as shown in Fig. 12. When pulse light is repetitively entered into the fibre and the pulse generating interval is gradually reduced, the Rayleigh scattering light of the plurality of light pulses overlap with one another and the time-dependence property gradually disappears. Meanwhile, the Fresnel reflection takes place only at the second or distal end of the fibre. Accordingly, if pulse light is repetitively incident on the fibre, the Fresnel reflection light returns to the incident end while keeping the original waveform, which is the same as the waveform of the incident light. Therefore, if the modulated light of a short pulse generating interval, i.e., modulated with a high modulating frequency, is used, the Rayleigh scattering light is detected as light of a fixed power having no time-dependency, and the Fresnel reflection light is detected as a modulated light power having the original waveform.

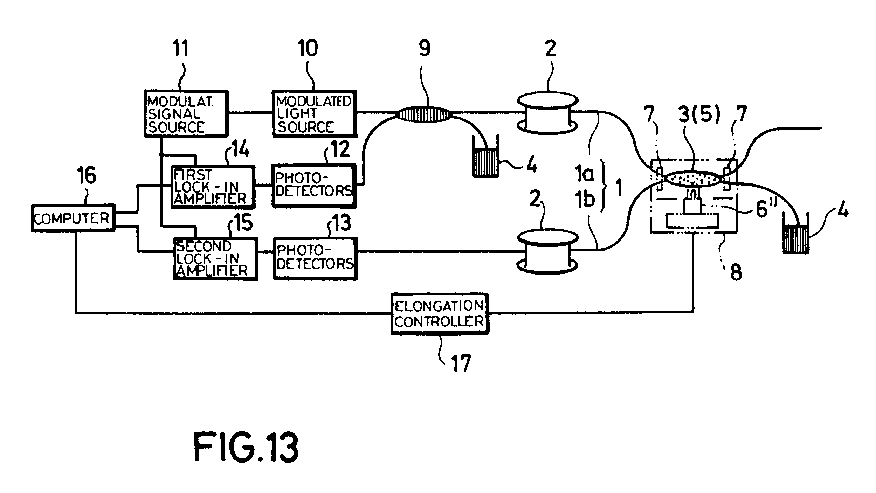

An apparatus for fabricating optical fibre couplers, will be described with reference to Fig. 13. In the fabricating apparatus, a couple of long single-mode optical fibres 1, which are wound around bobbins 2, are used. A number of optical fibre couplers 3 having the splitting ratio of 1 : 1 (50 %) are successively formed while the fibres are pulled out of the bobbins. In this embodiment, the two fibres, which are exactly the same, are used. For ease of explanation, the optical fibre located above in the drawing is called a first optical fibre and denoted as 1a, and the fibre located below is called a second optical fibre and denoted as 1b. The first ends of the fibres la and 1b are coupled with various devices for monitoring the splitting ratio of the optical fibre couplers 3 to be fabricated and for controlling the coupler forming operation. The second ends of the fibres are open. The open end of the first optical fibre 1a is merely opened, but the open end of the second optical fibre 1b is immersed in refractive index matching oil pots 4. A coupler forming part 5 of the first and second optical fibres 1a and 1b is formed in a location of the optical fibres la and 1b, where is closer to the refractive index matching oil pots 4. The coupler forming part 5 is formed in such a way that the covers of the portions of the fibres 1a and 1b where the coupler forming part is to be formed, are removed, and the fibres are closely combined there. A coupler is formed by heating and fusing the thus formed coupler forming part by a suitable heating means, such as a burner, and elongating it. To this end, the coupler forming part 5 is set to an elongating jig 8 including a burner 6" and elongation tables 7.

The first or one end of the first optical fibre la is connected through a measuring coupler 9 to a modulated-light source 10, such as a semiconductor laser device. A modulating signal source 11 is located upstream of the light source 10 and connected to the same. The modulated light source 10, constructed with a semiconductor laser, emits a modulated light (pulse light) of high frequency in response to a signal from the modulating signal source 11. That is, a desired pulse light is generated from the light source 11 by the modulating signal from the modulating signal source 11, and is led into the fibre la from the first end thereof, through the measuring coupler 9. As for the split of the coupler 9 on the first optical fibre la side, the first end of the coupler is connected to the first optical fibre 1a, and the second end is immersed in a refractive index matching oil pot 4 to prevent reflection of light at the second end. As for the split of the coupler 9 on the monitor devices side, the first end of the coupler is connected to the light source 10, and the second end is connected to a first photodetector 12. The first end of the second optical fibre 1b is connected to a second photodetector 13. Those photodetectors 12 and 13 are constructed with optoelectric transducing elements for converting the reflected light guided thereto into electric signals. More specifically, the reflected light from the second end of the first optical fibre la passes through the coupler forming part 5 where it is split. The split light is guided to the first and second optical fibres 1a and 1b. The split reflected light passes through the first optical fibre 1a, is further split by the measuring coupler 9, and led to the first photodetector 12 where it is detected. The split reflected light, after passing through the second optical fibre 1b, is guided to the second photodetector 13 where it is detected.

A first lock-in amplifier 14 is connected to the first photodetector 12 located upstream of the amplifier. A second lock-in amplifier 15 is connected to the second photodetector 13 located upstream of the amplifier. Those amplifiers 14 and 15 are coupled with a computer 16 for calculating splitting ratios, and function to amplify the Fresnel reflection light component of the reflected light. Further, the amplifiers 14 and 15 are coupled with the modulating signal source 11, and operate in synchronism with a signal from the modulating signal source 11. That is, the amplifiers pick up the modulated light, which were applied from the light source 10 to the optical fibre 1, from the reflected light detected by the photodetectors 12 and 13, and amplify the modulated light. Thus, the amplifiers amplify the Fresnel reflection light in the detected light which also contain Rayleigh scattering light, so that the Rayleigh scattering light is lowered relative to the Fresnel reflection light, thereby to reduce the influence by the Rayleigh scattering light. The computer 16 calculates a splitting ratio on the basis of the quantities of the reflected light amplified by the lock-in amplifiers 14 and 15, by using a formula to be given later. When the calculated value reaches a predetermined splitting ratio (50 % in this embodiment), the computer outputs a control signal to stop the elongating operation of the elongation controller 14 coupled with the computer.

The elongation controller 17, which is coupled with the elongation jig 8, drives the jig 8 in response to the control signal from the computer 16. The jig 8 is provided with the burner 6" for heating the coupler forming part 5 and the elongation tables 7. With the jig, the coupler forming part 5 is heated, fused, and elongated. When receiving a stop control signal from the computer 16, the elongation controller 17 stops the elongating operation of the jig 8 with the control signal.

The principles of the above monitor method will be described in brief. Assuming that a light power detected by the first photodetector 12 before the optical fibre coupler is fabricated is Po, and light powers detected by the first and second photodetectors 12 and 13 when the coupler is being fabricated are P1 and P2, a splitting ratio (defined by a ratio of the light powers in the branch line) of the optical fibre coupler 3, that is computed by the computer 16 during the coupler fabricating process, is expressed by$\text{Splitting ratio = (s/(t + s)) x 100 (%)}$ where${\text{t = (P1/Po)}}^{\text{1/2}} \text{,}$${\text{s = (α1/α2)So(P2}}^{\text{2}} {\text{/PoP1)}}^{\text{1/2}} \text{.}$ In the above formula, α1 and α2 are transmittances (emitting light power/incident light power) of the first and second optical fibres 1a and 1b, and So is the transmittance of the main line (main line emitting light power/main line incident light power). The calculations by the computer 16 are performed using the formulae as just mentioned. When a desired splitting ratio is reached, the computer outputs a signal to stop the elongating operation of the coupler forming part. Actually, the light powers Po, P1, and P2 are the values amplified by the first and second lock-in amplifiers 14 and 15.

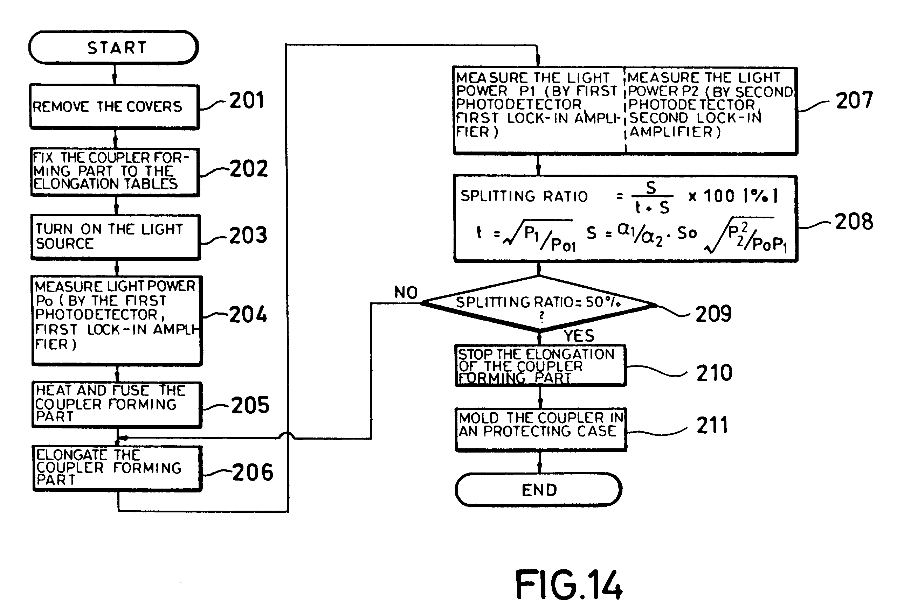

A sequence of coupler fabricating steps will be descried with reference to a flowchart shown in Fig. 14. To start with, the covers of the optical fibres 1 are partially removed to form a coupler forming part 5 (step 201). Both ends of the coupler forming part 5 are fixed to the elongation tables 7 and 7 of the jig 8 (step 202). Subsequently, the modulated-light source 10 is turned on (203). The reflected light Po returned from the second end of the first optical fibre la is detected by the first photodetector 11 (step 204). Afterwards, in this state, the coupler forming part 5 is heated and fused by the burner 6" (step 205), and elongated (step 206). During the elongating process, the light powers P1 and P2 are detected by the first and second detectors 12 and 13 (step 207). The detected values are input to the computer 16. The computer computes a splitting ratio using those light power values (step 208). The detecting operation of the light powers P1 and P2 in the elongating process and the calculation of the splitting ratio are repeated till the splitting ratio reaches 50 % (step 209). When 50 % is reached, the computer 16 outputs a stop signal to the elongation controller 17. In response to the stop signal, the elongation controller 17 stops the elongating operation of the jig 8 (step 210). The optical fibre coupler 3 thus formed is molded in or bonded to a protecting member (not shown), such as a case made of quartz (step 211).

A number of optical fibre couplers 3 are successively formed from the two long optical fibres la and 1b wound around the bobbins 2, by repeating the above sequence of fabricating steps. It is noted that the measuring coupler 9 and the second photodetector 13 are coupled with the first and second optical fibres la and 1b only when the first optical fibre coupler 3 is fabricated, and the coupling work may be omitted for fabricating the second and subsequent ones.

Optical fibre couplers 3 were fabricated by the fabricating method of the embodiment as mentioned above, and the splitting ratios of them were measured. The light source 10 was a superluminescent diode of 0.85 µm in wavelength. A rectangular wave, modulating signal at 200 kHz is applied to the light source 10, from the modulating signal source 10. In response to the signal, the light source 10 generates rectangular wave, pulse light at 200 kHz. The first and second optical fibres la and 1b were single mode fibres of 1 km long and the 0.85 µm band. The measuring coupler 9 was also a single mode coupler of the 0.85 µm band.

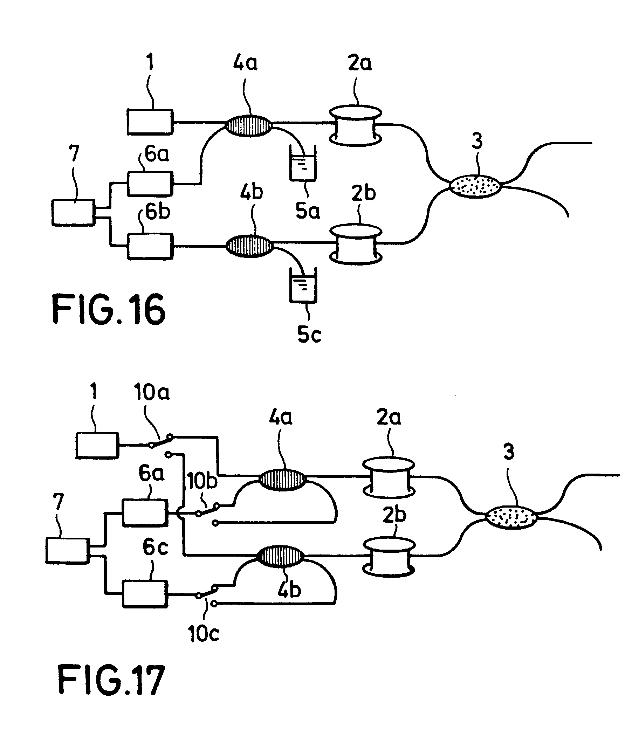

Under the aforementioned conditions, optical fibres of different splitting ratios were fabricated while monitoring the splitting ratios. Splitting ratios of the fabricated optical fibre couplers were measured by the transmission monitor method. The results of the measurement were plotted in Fig. 15. In the figure, black dots indicate the splitting ratios of the optical fibre couplers fabricated by the method of the invention, and white dots indicate the splitting ratios of the couplers fabricated by the conventional reflection monitor method. As seen from graph, the measurement results of the reflection monitor method of the present embodiment is perfectly coincident with those of the transmission monitor method of the present embodiment, and accordingly the optical fibre couplers having the exact splitting ratio were fabricated by the reflection monitor method of the present embodiment. The measurement results of the conventional reflection monitor method are not coincident with those of the conventional transmission monitor method. Therefore, the splitting ratio of the optical fibre couplers fabricated by the conventional reflection monitor method is somewhat inexact. From the above facts, the reflection monitor method of the present embodiment succeeded in removing the influence by the Rayleigh scattering light.

As seen from the foregoing description, modulated light is led to an optical fibre forming an optical fibre coupler from the first end thereof, and the light reflected at the second end is detected. The stop of the elongating operation of the coupler forming part is controlled on the basis of the ratio of a quantity of the detected light and a quantity of the incident modulated light. Therefore, the work for connecting the optical fibres and the monitor devices is simplified. The Fresnel reflection light and the Rayleigh scattering light may be discriminately detected. If only the Fresnel reflection light is selected and detected, the influence by the Rayleigh scattering light can be extremely reduced. The optical fibre couplers fabricated have an exact splitting ratio.

The present invention has been explained by referring to embodiments of reflection monitor method systems based on the conventional construction shown in Figure 3. However, other constructions, like those shown in Figs. 16 and 17, could serve as basic structures to which the inventive principles could be adapted.

In the construction of Fig. 16, an optical fibre coupler for measurement is additionally inserted in the route including the optical fibre 2b. Optical fibre couplers having the same characteristics are inserted in the photodetectors 6a and 6b, respectively, so that the reflected light power can be measured at the same gains.

In the construction of Fig. 17, optical switches 10a, 10b and 10c are additionally used. Laser light from the light source 1 is selectively guided to the fibre 2a or the fibre 2b by operating the switch 10a. The reflected light power or the incident light power to the optical fibre coupler 3 may be selectively measured by operating the switches 10b and 10c.

## Claims

1. A method of fabricating optical fiber couplers (5) comprising:
fusing and elongating a plurality of optical fibers till a desired splitting ratio is reached, during which process the following steps are carried out:
a first step in which a prescribed quantity of light is led into a first end of at least one optical fiber;
a second step in which the light led is reflected at a second end of the optical fiber and returns to pass again through said coupler (5), the return light being detected at the first end of the optical fiber; and
a third step of controlling the elongation of the coupler to stop on the basis of the ratio of the quantity of the detected light and the quantity of the incident light,
wherein the second end of a second optical fiber is connected to a reflection preventing device (3') and the second end of the first optical fiber is connected to a reflection device (8"), so as to prevent interference between the light from the second end of the first optical fiber and the light from the second end of the second optical fiber.

2. A method for fabricating optical fiber couplers according to claim 1, wherein the reflection preventing devices are provided on the distal end side of all other optical fibers than the fiber to which light has been led.

3. A method for fabricating optical fiber couplers according to claim 1 or 2, wherein the reflection preventing device (3') is realized by immersing the distal end of the optical fiber in light absorbing material or refractive index matching oil.

4. A method for fabricating optical fiber couplers according to claim 1 or 2, wherein the reflection preventing device is realized by bending the distal end of the optical fiber to reduce its diameter, thereby causing light loss.

5. A method for fabricating optical fiber couplers according to claim 1 or 2, wherein the reflection preventing device is realized by obliquely cutting or polishing the distal end of the optical fiber.

6. A method for fabricating optical fiber couplers , according to any one of the preceding claims, wherein long optical fibers are used, a light source (1) and photodetectors (6,6') are provided on the first end side of the optical fibers, and a coupler forming part (5) is formed on the second end side of the fibers.

7. Apparatus for producing optical fiber couplers, comprising:
at least two optical fibers (1a,1b), an elongation jig including a burner (6") and elongation tables (7) in which the optical fibers are set to be coupled together, a light source, a first and a second photodetector and a measurement coupler (2;9) having two optical inputs and two optical outputs whereby the first end of the first optical fiber being connected to the first output of the measurement coupler, the light source (10) is connected to the first input of the measurement coupler, the first photodetector (12) being connected to the second input of the measurement coupler, the second photodetector (13) is connected to the first end of the second optical fiber (1b), and both photodetectors are connected to a computing device (7;16) for computing splitting ratios of the produced optical fiber coupler and for generating a control signal for an elongation controller which stops the elongation process upon receipt of said control signal
and wherein the second output of the measurement coupler (2) is connected to a reflection preventing device (3'), the second end of the second optical fiber is connected to a reflection preventing device (3') and the second end of the first optical fiber is connected to a reflection device (8").

## Patentansprüche

1. Verfahren zur Herstellung von optischen Glasfaserkopplern (5) mit:
Schmelzen und Strecken einer Vielzahl von optischen Glasfasern, bis ein gewünschtes Teilungsverhältnis erreicht ist, wobei während dieses Prozesses die folgenden Schritte ausgeführt werden:
ein erster Schritt, in dem eine vorgeschriebene Lichtmenge einem ersten Ende von wenigstens einer optischen Glasfaser zugeführt wird;
ein zweiter Schritt, in dem das geführte Licht an einem zweiten Ende der optischen Glasfaser reflektiert wird und zurückkehrt, um den Koppler (5) erneut zu passieren, wobei das zurückgekehrte Licht an dem ersten Ende der optischen Glasfaser detektiert wird; und
ein dritter Schritt zum Steuern der Streckung des Kopplers und zum Anhalten des Streckens in Abhängigkeit des Verhältnisses von der Menge des detektierten Lichtes zu der Menge des einfallenden Lichtes,
wobei das zweite Ende einer zweiten optischen Glasfaser an eine Reflektionsverhinderungseinrichtung (3') und das zweite Ende der ersten optischen Glasfaser an einer Reflektionseinrichtung (8") angeschlossen ist, um eine Überlagerung zwischen dem Licht von dem zweiten Ende der ersten optischen Glasfaser und dem Licht vom zweiten Ende der zweiten optischen Glasfaser zu verhindern.

2. Verfahren zur Herstellung von optischen Glasfaserkopplern gemäß Anspruch 1, wobei die Reflektionsverhinderungseinrichtungen an den Enden aller optischen Glasfasern angebracht sind, außer bei der optischen Glasfaser, der Licht zugeführt wurde.

3. Verfahren zur Herstellung von optischen Glasfaserkopplern gemäß Anspruch 1 oder 2, wobei die Reflektionsverhinderungseinrichtung (3') realisiert wird, indem das ferne Ende der optischen Glasfaser in lichtabsorbierendes Material oder in Öl mit gleichem Brechungsindex eingetaucht wird.

4. Verfahren zur Herstellung von optischen Glasfaserkopplern gemäß Anspruch 1 oder 2, wobei die Reflektionsverhinderungseinrichtung realisiert wird, indem das ferne Ende der optischen Glasfaser verbogen wird, um dessen Durchmesser zu verkleinern, wodurch ein Lichtverlust herbeigeführt wird.

5. Verfahren zur Herstellung von optischen Glasfaserkopplern gemäß Anspruch 1 oder 2, wobei die Reflektionsverhinderungseinrichtung durch schräges Anschneiden oder Polieren des fernen Endes der optischen Glasfaser realisiert wird.

6. Verfahren zur Herstellung von optischen Glasfaserkopplern gemäß einem der vorhergehenden Ansprüche, wobei lange Glasfasern benutzt werden, eine Lichtquelle (1) und Photodetektoren (6, 6') an den ersten Enden der Glasfasern bereitgestellt werden und ein Kopplerformierungsteil (5) an den zweiten Enden der Glasfasern gebildet wird.

7. Vorrichtung zur Herstellung von optischen Glasfaserkopplern mit:
wenigstens zwei optischen Glasfasern (1a, b), einer Streckungseinrichtung umfassend einen Brenner und Streckungstische (7), in denen die optischen Glasfasern eingesetzt werden, um zusammen verbunden zu werden, eine Lichtquelle, einen ersten und einen zweiten Photodetektor und einen Meßkoppler (2, 9), der zwei optische Eingänge und zwei optische Ausgänge aufweist, wobei das erste Ende der ersten optischen Glasfaser mit dem ersten Ausgang des Meßkopplers verbunden ist, die Lichtquelle (10) mit dem ersten Eingang des Meßkopplers verbunden ist, der erste Photodetektor (12) mit dem zweiten Eingang des Meßkopplers verbunden ist, der zweite Photodetektor (13) mit dem ersten Ende der zweiten optischen Glasfaser (1b) verbunden ist und beide Photodetektoren mit einer Rechnereinrichtung (7, 16) verbunden sind, um die Teilungsverhältnisse der hergestellten optischen Glasfaserkoppler zu berechnen und um ein Steuersignal für einen Streckungsregler, der den Streckungsprozeß bei Empfang dieses Steuersignals anhält, zu erzeugen, und
wobei der zweite Ausgang des Meßkopplers (2) an eine Reflektionsverhinderungseinrichtung (3') angeschlossen ist, das zweite Ende der zweiten optischen Glasfaser an eine Reflektionsverhinderungseinrichtung (3') angeschlossen ist und das zweite Ende der ersten optischen Glasfaser an eine Reflektionseinrichtung (8") angeschlossen ist.

## Revendications

1. Procédé de fabrication de coupleurs à fibres optiques (5) comprenant :
la fusion et l'élongation d'un ensemble de fibres optiques, jusqu'à un rapport de division désiré soit atteint, avec les étapes suivantes accomplies pendant ce processus :
une première étape dans laquelle une quantité de lumière déterminée est introduite dans une première extrémité d'au moins une fibre optique; une seconde étape dans laquelle la lumière introduite est réfléchie à une seconde extrémité de la fibre optique et elle retourne pour traverser à nouveau le coupleur (5), la lumière de retour étant détectée à la première extrémité de la fibre optique; et
une troisième étape consistant à commander l'arrêt de l'élongation du coupleur sur la base du rapport entre la quantité de la lumière détectée et la quantité de la lumière incidente,
dans lequel la seconde extrémité d'une seconde fibre optique est connectée à un dispositif antiréflexion (3') et la seconde extrémité de la première fibre optique est connectée à un dispositif de réflexion (8"), de façon à éviter des interférences entre la lumière provenant de la seconde extrémité de la première fibre optique et la lumière provenant de la seconde extrémité de la seconde fibre optique.

2. Un procédé de fabrication de coupleurs à fibres optiques selon la revendication 1, dans lequel les dispositifs antiréflexion sont disposés du côté de l'extrémité distale de toutes les fibres optiques autres que la fibre dans laquelle de la lumière a été introduite.

3. Un procédé de fabrication de coupleurs à fibres optiques selon la revendication 1 ou 2, dans lequel le dispositif antiréflexion (3') est réalisé en immergeant l'extrémité distale de la fibre optique dans une matière absorbant la lumière ou dans de l'huile d'adaptation d'indice de réfraction.

4. Un procédé de fabrication de coupleurs à fibres optiques selon la revendication 1 ou 2, dans lequel le dispositif antiréflexion est réalisé en courbant l'extrémité distale de la fibre optique de façon à réduire sont diamètre, ce qui a pour effet de produire une perte de lumière.

5. Un procédé de fabrication de coupleurs à fibres optiques selon la revendication 1 ou 2, dans lequel le dispositif antiréflexion est réalisé en polissant ou en coupant en oblique l'extrémité distale de la fibre optique.

6. Un procédé de fabrication de coupleurs à fibres optiques selon l'une quelconque des revendications précédentes, dans lequel on utilise des fibres optiques longues, on place une source de lumière (1) et des photodétecteurs (6, 6') du côté de la première extrémité des fibres optiques, et on forme une partie de formation de coupleur (5) du côté de la seconde extrémité des fibres.

7. Appareil pour fabriquer des coupleurs à fibres optiques, comprenant :
au moins deux fibres optiques (1a, 1b), une monture d'élongation comprenant un brûleur (6") et des plateaux d'élongation (7), dans laquelle les fibres optiques sont placées pour être couplées ensemble, une source de lumière, des premier et second photodétecteurs et un coupleur de mesure (2; 9) ayant deux entrées optiques et deux sorties optiques, avec une configuration dans laquelle la première extrémité de la première fibre optique est connectée à la première sortie du coupleur de mesure, la source de lumière (10) est connectée à la première entrée du coupleur de mesure, le premier photodétecteur (12) est connecté à la seconde entrée du coupleur de mesure, le second photodétecteur (13) est connecté à la première extrémité de la seconde fibre optique (1b), et les deux photodétecteurs sont connectés à un dispositif de calcul (7; 16) pour calculer des rapports de division du coupleur à fibres optiques qui est produit, et pour générer un signal de commande pour une unité de commande d'élongation qui arrête le processus d'élongation à la réception du signal de commande,
et dans lequel la seconde sortie du coupleur de mesure (2) est connectée à un dispositif antiréflexion (3'), la seconde extrémité de la seconde fibre optique est connectée à un dispositif antiréflexion (3') et la seconde extrémité de la première fibre optique est connectée à un dispositif de réflexion (8").
